# EUROPEAN PATENT APPLICATION

(11) **EP 4 825 522 A1**
(43) Date of publication of application: **21.10.2026**
(21) Application number: 24904164.1
(22) Date of filing: 05.12.2024
(51) Int. Cl.: B23K 31/00, B21D 17/04, C21D 10/00

(54) **RESIDUAL STRESS REDUCING METHOD FOR WELDED JOINT AND RESIDUAL STRESS REDUCING APPARATUS FOR SAME**

(30) Priority: 15.12.2023 KR 20230183847
(71) Applicant: POSCO Co., Ltd, Gyeongsangbuk-do 37859 (KR)
(72) Inventor: LEE, Jae-Yik, Pohang-si, Gyeongsangbuk-do 37877 (KR)
(74) Representative: Meissner Bolte Partnerschaft mbB
(86) International application number: PCT/KR2024/019777
(87) International publication number: WO 2025/127599

(57) **Abstract**

The present disclosure relates to a method and an apparatus for reducing welding residual stress in a steel structure having a weld line. Specifically, the method for reducing welding residual stress comprises the steps of: plastically deforming a deformation target region, which is a base metal region adjacent to an interface between a weld bead of the weld line and a base metal, by bringing a circular disc into contact with the deformation target region and applying a compressive load to the deformation
target region by means of the circular disc which is rotating; and transferring the steel structure or the circular disk such that an indentation caused by the plastic deformation extends in a continuous linear shape along the weld line in the deformation target region.

## Description

### Technical Field

The present disclosure relates to a residual stress reducing apparatus and method thereof for a welded joint.

### Background Art

Residual stress, which inevitably occurs after welding, is caused by differences in local heating and cooling, and the residual stress affects the fracture performance, such as fatigue fracture, of welded joints. In general, to reduce welding residual stress, a post-weld heat treatment method is applied in which a welded component is heated for a long period of time in a furnace, thereby reducing relative deformation between a base metal and a welding metal. However, the application of post-weld heat treatment methods is significantly limited due to limitations in furnace size.

For example, tanks (Type-C LCO₂ tanks) of liquefied carbon dioxide carriers, which have recently attracted attention, are being designed with significantly increased size and fabricated using high-strength steel (YS690 grade) in order to enhance transport capacity. However, expansion of furnace size is limited, and even when the furnace size is increased, there are problems in that stress-relief heat treatment entails high cost and that it is difficult to satisfy the heat-treatment criteria prescribed by classification societies.

### Summary of Invention

### Technical Problem

An aspect of the present disclosure is to provide a method and apparatus for relieving welding residual stress.

An aspect of the present disclosure is to provide a method and apparatus for relieving welding residual stress regardless of a size of a steel structure.

An aspect of the present disclosure is to provide a method and apparatus for rapidly and precisely relieving welding residual stress in a welded joint.

An aspect of the present disclosure is to provide a method and apparatus for relieving residual welding stress in a welded joint for each base metal, even when the base metals being welded to each other have different physical properties.

The subject of the present disclosure is not limited to the above. Those skilled in the art to which the present invention pertains will have no difficulty in understanding the additional objects of the present invention from the contents throughout the present specification.

### Solution to Problem

According to an aspect of the present disclosure, a method for reducing welding residual stress in a steel structure having a welding line includes: plastically deforming a deformation target region, which is a base metal region adjacent to an interface between a weld bead of a welding line and a base metal, by bringing a circular disc into contact with the deformation target region and applying a compressive load to the deformation target region by the circular disk which is rotating; and transferring, in the deformation target region, the steel structure or the circular disk such that an indentation caused by the plastic deformation extends in continuous linear form along the welding line.

During the plastic deformation, the deformation target region may be heated by at least frictional heat generated by the rotation of the circular disk.

A depth of the indentation may be controlled by a heating temperature of the deformation target region and the compressive load applied by the circular disk.

A diameter of the circular disk may be 100 mm or greater.

An edge of the circular disk may be a tapered type, a rounded type, or an eccentric type.

The circular disk may be perpendicular to a surface of the deformation target region where the indentation is formed, or tilted at an angle of 65° or less.

n indentations may be formed in the deformation target region by n (where n is a natural number from 2 to 5) circular disks spaced apart from each other in a width direction of the welding line.

Two circular disks may be arranged spaced apart from each other with the welding line interposed therebetween, so that the indentations are formed in each of the deformation target regions on both sides of the welding line.

A first disk set including j (where j is a natural number from 2 to 5) circular disks arranged spaced apart from each other in the width direction of the welding line, and a second disk set including k (where k is a natural number from 2 to 5) circular disks arranged spaced apart from each other in a width direction of the welding line may be arranged spaced apart from each other with the welding line interposed therebetween, so that j indentations are formed in one deformation target region among deformation target regions on both sides of the welding line and k indentations are formed in the other deformation target region.

The method may further include l (where l is a natural number from 2 to 4) circular disks arranged spaced apart from each other in a longitudinal direction of the welding line.

A third disk set including the l circular disks and a fourth disk set including m (where m is a natural number from 2 to 4) circular disks arranged spaced apart from each other in the longitudinal direction of the welding line may be arranged spaced apart from each other with the welding line interposed therebetween, so that at least two indentations are superimposed in each of the deformation target regions on both sides of the welding line.

The circular disks forming the disk set may be identical or different in at least one factor selected from a diameter of the disk, a thickness of the disk, a shape of a disk edge, a tilting angle of the disk, a compressive load applied to the disk, and a rotational speed of the disk.

The deformation target region may be a region within 0.1 cm to 20 cm from the interface toward the base metal.

The frictional heat may be applied to the deformation target region having residual weld heat.

The method may further include, after the formation of the continuous linear indentation is completed, annealing the steel structure on which the indentation is formed, and after the annealing, a surface treatment step of removing surface irregularities caused by the indentation.

The steel structure may be a fluid storage vessel, a ship structure, a marine structure, an offshore wind power monopile, or an automobile body.

According to an aspect of the present disclosure, an apparatus for reducing welding residual stress in a steel structure having a welding line includes: a deformation unit including a circular disk that is rotatable while in contact with a base metal in a deformation target region, which is a base metal region adjacent to an interface between a weld bead and the base metal of the welding line; a load applying unit applying an axial load to the circular disk of the deformation unit in a direction of the base metal; and a transfer unit transferring the steel structure in a longitudinal direction of the welding line so that the circular disk is positioned within the deformation target region.

According to an aspect of the present disclosure, an apparatus for reducing welding residual stress in a steel structure having a welding line includes: a deformation unit including a circular disk that is rotatable while in contact with a base metal in a deformation target region, which is a base metal region adjacent to an interface between a weld bead and the base metal of the welding line; a load applying unit applying an axial load to the circular disk of the deformation unit in a direction of the base metal; and a transfer unit transferring the deformation unit in a longitudinal direction of the welding line along the welding line so that the circular disk is positioned within the deformation target region.

The deformation unit may include two circular disks arranged spaced apart from each other and each contacting deformation target regions on both sides of the welding line, with the welding line interposed therebetween.

The deformation unit may include a first disk set and a second disk set arranged spaced apart from each other and each contacting deformation target regions on both sides of the welding line, with the welding line interposed therebetween, the first disk set may include j (where j is a natural number from 2 to 5) circular disks arranged spaced apart from each other in a width direction of the welding line, and the second disk set may include k (where k is a natural number from 2 to 5) circular disks arranged spaced apart from each other in the width direction of the welding line.

The deformation unit may include a third disk set and a fourth disk set arranged spaced apart from each other and each contacting deformation target regions on both sides of the welding line, with the welding line interposed therebetween, the third disk set may include l (where l is a natural number from 2 to 4) circular disks arranged spaced apart from each other in the longitudinal direction of the welding line, and the fourth disk set may include m (where m is a natural number from 2 to 4) circular disks arranged spaced apart from each other in the longitudinal direction of the welding line.

The apparatus may further include a control unit controlling one or more factors selected from a rotational speed of the circular disk, a transfer speed of the transfer unit, and a load applied to the circular disk by the load applying unit.

### Advantageous Effects of Invention

According to a method according to an aspect of the present disclosure, it is possible to rapidly relieve welding residual stress around a welding line through mechanical deformation.

According to an apparatus according to an aspect of the present disclosure, it is possible to relieve welding residual stress by rapidly forming highly controlled compressive residual stress in a target area.

Various and beneficial advantages and effects in the present disclosure are not limited to the above description, and may be more easily understood in the course of describing the specific example embodiments in the present disclosure.

### Brief Description of Drawings

FIG. 1 is a schematic diagram illustrating a cross-section perpendicular to a welding line in a steel structure having a welding line, and a residual stress profile according to position.
FIG. 2 is a schematic diagram illustrating a process step of forming an indentation in a deformation target region in a method for reducing welding residual stress according to an example embodiment.
FIG. 3 is a schematic diagram illustrating a cross-section perpendicular to a welding line in a steel structure after forming an indentation, and depicting a residual stress profile according to position in a method for reducing welding residual stress according to an example embodiment.
FIG. 4 is a schematic diagram illustrating a process step in which an indentation is continuously extended in a linear shape in a deformation target region in the method for reducing welding residual stress according to an example embodiment.
FIG. 5 is a cross-sectional view of an edge shape of a circular disk and a schematic diagram illustrating an indentation shape formed in a deformation target region by a circular disk having each edge shape in the method for reducing welding residual stress according to an example embodiment.
FIG. 6 is a schematic diagram illustrating a process for forming an indentation in a deformation target region by a rotating circular disk in the method for reducing welding residual stress according to an example embodiment.
FIG. 7 is another schematic diagram illustrating a process for forming the indentation in the deformation target region by the rotating circular disk in the method for reducing welding residual stress according to an example embodiment.
FIGS. 8 to 11 are still another schematic diagram illustrating a process for forming the indentation in the deformation target region by the rotating circular disk in the method for reducing welding residual stress according to an example embodiment.

### Best Mode for Invention

Example embodiments of the present disclosure will be described below with reference to the accompanying drawings. However, the example embodiments of the present disclosure may be modified in many different forms and the scope of the present disclosure should not be limited to the example embodiments set forth herein.

In addition, these example embodiments are provided so that this disclosure will be thorough and complete, and will fully convey the concept of the present disclosure to those skilled in the art.

In the accompanying drawings, shapes and dimensions of components may be exaggerated for clarity.

In description of example embodiments of the present disclosure, well-known technologies are not described in detail not to obscure the description of the present disclosure with unnecessary detail. Further, the following terminologies are defined in consideration of the functions in the present disclosure and may be construed in different ways by the intention of users and operators. Therefore, the definitions thereof should be construed based on the contents throughout the specification. The terms used in the detailed description is merely for describing the example embodiments of the present disclosure and should in no way be limited. Unless clearly used otherwise, an expression in the singular form includes the meaning of the plural form.

In this description, expressions such as "including" or "comprising" are intended to indicate certain characteristics, numbers, steps, operations, elements, some or combinations thereof, and it should not be interpreted to exclude the existence or possibility of one or more other characteristics, numbers, steps, operations, elements, parts or combinations thereof other than those described.

Unless otherwise specified in the present specification, the unit '%' means weight%.

A case in which any one part is connected with the other part includes a case in which the parts are directly connected with each other and a case in which the parts are indirectly connected with each other with other elements interposed therebetween.

Below, the present disclosure will be described in detail through each example embodiment or example of the present disclosure. It should be noted that each example embodiment or example described in this specification is not limited to one example embodiment or example but may also be combined with other example embodiments or examples. Therefore, the citation of claims in the claim is merely an example of an example embodiment and the technical concept of the present disclosure should not be construed as being solely limited to the combination with the cited claim. Combinations with various claims also fall within the scope of the technical concept of the present disclosure.

Terms used in the present disclosure are to describe the present disclosure, and are not intended to limit the present disclosure. In addition, singular forms used herein include the plural forms unless the relevant definition clearly dictates the contrary.

The meaning of "including" as used in the specification specifies a component, and does not exclude the presence or addition of other components.

Unless defined otherwise, all terms including technical terms and scientific terms used herein have the same meaning as commonly understood by a person of ordinary skill in the art to which the present invention belongs. The terms defined in the dictionary are interpreted to have a meaning consistent with the related technical literature and the currently disclosed content.

In this specification and the appended claims, "steel structure" means a structure in which at least two steel members are integrated by welding.

In this specification and the appended claims, "weld bead" means the welding metal formed by welding and bonding the two steel members together. The welding metal refers to metal that is melted by the welding energy during welding and is then solidified.

In this specification and the appended claims, the "welding line" means a weld bead generated by continuous welding and having a macroscopically linear shape.

In this specification and the appended claims, "base metal" refers to a material of a member to be welded. The base metal includes not only the raw material of the member to be welded, but also materials whose microstructure and mechanical properties are altered by welding heat.

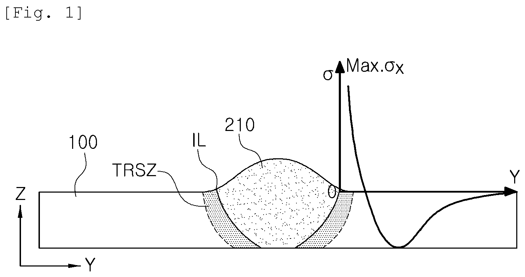

FIG. 1 is a schematic diagram illustrating a cross-section perpendicular to a welding line in a steel structure having a welding line, and is a schematic diagram illustrating a residual stress σ profile as a function of position Y, where a boundary (interface) between a weld bead and a base metal in a cross-section is defined as an origin 0 of a Y-axis, and a direction from the boundary toward the base metal is defined as an increasing direction of the Y-axis. Although the steel structure is integrated by welding two pieces of steel, the two pieces of steel are collectively referred to as the base metal 100 without distinction.

As in one example illustrated in FIG. 1, the steel structure includes a base metal 100 and a weld bead 210 formed by welding. In a direction from an interface IL between a weld bead 210 and a base metal 100 toward the base metal, similar to a welding residual stress profile applied to the base metal, a largest tensile residual stress is formed at the interface IL, and a compressive residual stress capable of offsetting the tensile residual stress is formed in a region outside a welding-affected region. In the schematic cross-sectional view of FIG. 1, a high-tensile-residual-stress region in which a high tensile residual stress is formed in the vicinity of the interface IL is also illustrated as "TRSZ."

In detail, the welding residual stress is generated when the base metal (the base metal not affected by the welding heat) restrains contraction of a weld bead and a heat-affected region having a higher temperature after the weld bead and the base metal become a single continuum after welding. In other words, the welding residual stress is a stress generated when the base metal restrains the contraction of the weld bead whose temperature has risen to a molten state immediately after welding, which represents a state in which the base metal tightly constrains the contraction of the weld bead. Therefore, the welding residual stress is essentially a tensile residual stress. As in the welding residual stress profile in FIG. 1, a maximum tensile residual stress generated at the interface IL between the weld bead and the base metal. The compressive residual stress, corresponding to the balance of force of the tensile residual stress, is generated in the base metal beyond the weld heat-affected zone. In one specific example, in the case of mild steel, the maximum tensile residual stress equivalent to a yield stress of the mild steel may be generated at the interface between the weld bead and the base metal as the mild steel.

The present disclosure relates to a residual stress reducing method capable of mechanically relieving the welding residual stress, particularly the welding tensile residual stress, formed in a welded joint including the welding line and the weld heat-affected zone.

The residual stress reducing method according to one disclosure includes the steps of: contacting a circular disk with a deformation target region, which is a base metal region adjacent to an interface between a weld bead of a welding line and a base metal in a steel structure having the welding line, and applying a compressive load to the deformation target region using the rotating circular disk to plastically deform the deformation target region; and transferring the steel structure or the circular disk to the deformation target region so that an indentation caused by the plastic deformation extends along the welding line in continuous linear form.

In one specific example, the deformation target region may be a region within 0.1 cm to 20 cm from the interface between the base metal and the weld bead (welding line) toward the base metal (one base metal side), specifically, a region within 1 cm to 10 cm from the interface toward the base metal.

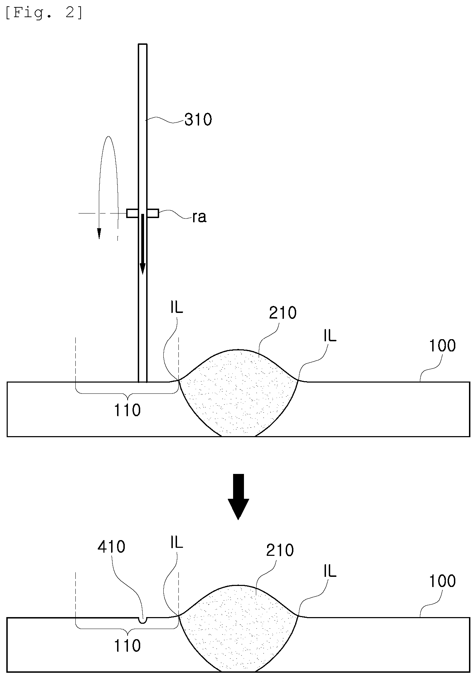

FIG. 2 is a schematic process diagram illustrating a step of forming an indentation 410 in the deformation target region 110 by applying a compressive load to a deformation target region 110 using a rotating circular disk 310 in the method for reducing welding residual stress according to one specific example. In this case, the compressive load may be applied to a rotational axis ra of the circular disk.

The circular disk 310 may contact the deformation target region 110 adjacent to the interface IL between the weld bead 210 of the welding line and the base metal 100. The circular disk 310 may contact the deformation target region 110 while rotating, or rotate after contacting the deformation target region 110.

The deformation target region 110 in contact with the circular disk 310 may be heated by frictional heat generated by the rotation of the circular disk 310. By applying the compressive load (indicated by an arrow in 310) to the heated deformation target region 110 by the rotating circular disk 310, the rotating circular disk 310 may be recessed into the deformation target region 110 and plastically deform the deformation target region 110, thereby forming the indentation 410 at the area in contact with the circular disk 310.

As described above, the method for reducing welding residual stress according to an example embodiment may be performed by heating the deformation target region using the rotating circular disk and applying the compressive load substantially simultaneously to plastically deform the deformation target region. By heating and plastically deforming the deformation target region by the circular disk, the designed compressive stress may be quickly and precisely generated in the deformation target region, and this compressive stress may be used to relieve the welding (tensile) residual stress.

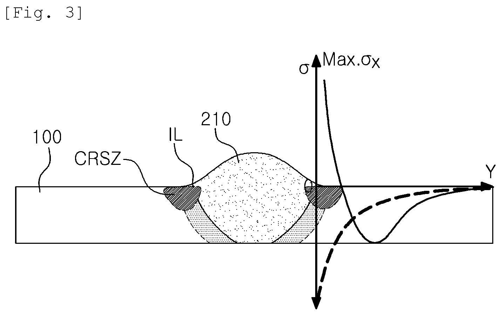

FIG. 3 illustrates a cross-section perpendicular to the welding line in the steel structure having the welding line after plastic deformation (the indentation formation) is performed by the compressive load applied from a rotating circular disk, and is a schematic diagram illustrating the residual stress σ profile as the function of position Y, with the boundary (interface, IL) between the weld bead 210 and the base metal 100 as the origin 0 of the Y-axis and the direction toward the base metal where the indentation is formed as the increasing direction of the Y-axis. In this case, the cross-section perpendicular to the welding line refers to the cross-section of the steel structure perpendicular to a longitudinal direction of the welding line, and the welding line in the cross-section is referred to as the weld bead and described in detail. A width direction of the welding line is the same as that of the weld bead. The width direction of the weld bead at a point along the welding line may be a direction perpendicular to the longitudinal direction of the welding line at the corresponding point. The longitudinal direction of the welding line is the same as an extension direction of the weld bead.

In the residual stress σ profile in FIG. 3, the residual stress due to welding is illustrated as a solid line, and the residual stress caused by the plastic deformation due to the compressive load is illustrated as a dotted line. Furthermore, the area where the high compressive residual stress remains around the indentation is indicated as "CRSZ."

As illustrated in the example of the residual stress profile in FIG. 3, the tensile residual stress formed by conventional welding may be offset by the compressive residual stress caused by the plastic deformation, thereby reducing the welding residual stress.

During the plastic deformation, the deformation target region may be heated, at least by the frictional heat generated by the rotation of the circular disk, and the depth of the indentation generated by plastic deformation may be controlled by the compressive load.

The rotating circular disk may contact the base metal over a large area, allowing the rotating circular disk to rapidly heat a relatively large base metal region to a target temperature. In this case, the frictional heat generated by the rotating circular disk may be controlled by one or more factors selected from a diameter and rotational speed of the circular disk, and the compressive load applied to the circular disk.

By rapidly heating a relatively large base metal region to the target temperature, the compressive residual stress may be generated over a wider range with a smaller compressive load (smaller indentation). By controlling the magnitude of the compressive load applied through the circular disk, the depth of the indentation and the resulting compressive residual stress may be easily controlled.

In addition, in the state in which the circular disk rotates and applies the compressive load to the base metal, even if the circular disk or steel structure moves, the surface of the base metal that newly comes into contact with the circular disk due to movement is already heated by heat conduction. Therefore, by rapidly or continuously moving the rotating circular disk or steel structure, the tensile residual stress in the deformation target region along the welding line may be relieved.

To stably achieve the above-described effect, the diameter of the circular disk is preferably 100 mm or greater, more preferably 200 mm or greater, and even more preferably 250 mm or greater. The circular disk may have a diameter of substantially 500 mm or less, but the present disclosure may not be limited by the upper limit of the circular disk diameter.

The element being "transferred" in the step where the indentation is extended, i.e., the "moving" subject, may be the steel structure, the circular disk, or both. As the 'movement' is a relative concept, even if both the steel structure and the circular disk move, when the moving speed of the steel structure and the moving speed of the circular disk are different, an element that moves faster may be interpreted as moving relative to an element that moves more slowly.

As described above, since the 'movement' occurs due to the relative movement difference between the steel structure and the circular disk, the circular disk is assumed to be the subject of movement (the element being transferred) in the detailed description of the method for reducing welding residual stress below. However, the following description applies substantially the same even when the steel structure, not the circular disk, is the subject of movement. Furthermore, even when both the circular disk and the steel structure move, when net movement exists due to the difference in transfer speed, the following description also applies substantially the same. For example, when the circular disk is the subject of movement, the circular disk moves (is transferred) along the welding line within the deformation target region, which corresponds to a case in which the steel structure is the subject of movement and is moved (transferred) such that a region of the steel structure in contact with the circular disk moves along the welding line within the deformation target region.

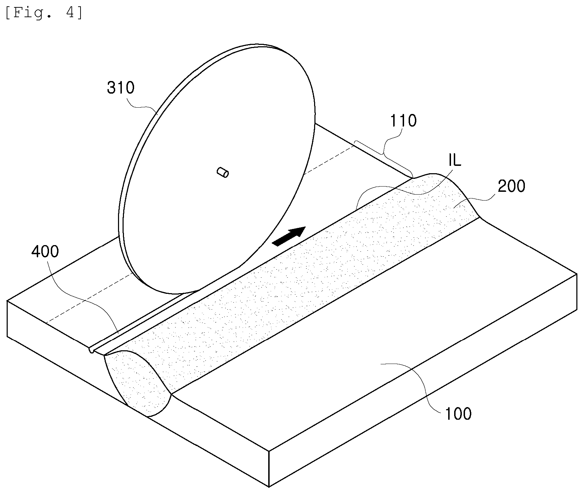

FIG. 4 is a schematic diagram illustrating a process in which the circular disk (rotating circular disk, 310) moves along the welding line 200 within the deformation target region 110, and the indentation extends along the welding line 200 in the continuous linear shape. Hereinafter, the linearly extended indentation may also be referred to as an indentation line 400. In the schematic diagram of FIG. 4, the movement direction of the circular disk 310 is indicated by an arrow.

As illustrated in the schematic diagram of FIG. 4, the circular disk 310 may move along the welding line 200 within the deformation target region 110. Specifically, the circular disk 310 may move in the longitudinal direction of the welding line 200 within the deformation target region 110.

The circular disk 310 may be rotating while moving, and simultaneously, the compressive load may be applied toward the base metal 100. When the circular disk 310 moves, the indentation may extend along a movement trajectory of the circular disk 310 in the continuous linear shape. Accordingly, the indentation line may be formed within the deformation target region 110, the indentation line being in contact with the welding line or spaced apart from the welding line and having a shape corresponding to at least a portion of the welding line. Here, the shape of the welding line is more appropriately interpreted as the shape of a line obtained by replacing the welding line with a simple line in the steel structure, rather than as a three-dimensional shape of the welding line.

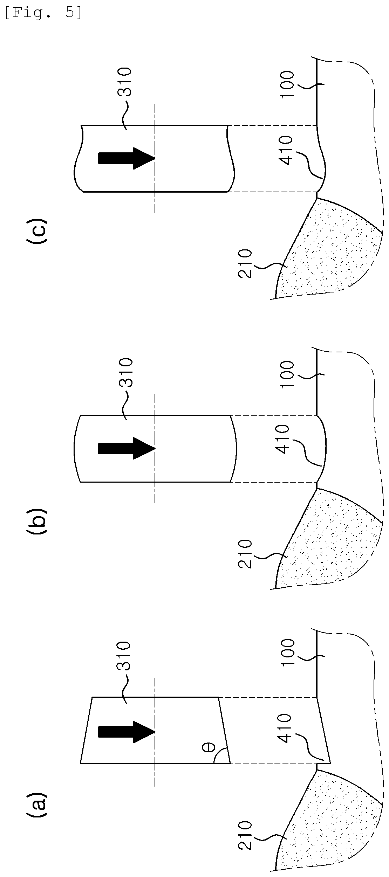

FIG. 5 is a cross-sectional view illustrating an edge shape of the circular disk 310 and is a schematic diagram illustrating the shapes of the indentations 410 that may be formed in the deformation target region by the circular disk 310 having each edge shape.

FIG. 5A is an example of the circular disk 310 having a tapered edge. Due to the tapered edge shape, the indentation 410 having a tapered shape in which one side is deeply recessed and the recessed depth continuously becomes shallower may be formed in the deformation target region. When using the circular disk 310 having the tapered edge, a size of the indentation 410, a depth of the indentation 410, and/or the degree of tapering of the indentation may be controlled by adjusting one or more factors selected from the thickness and the taper angle θ of the circular disk 310, and the compressive load applied to the circular disk 310.

FIG. 5B illustrates an example of the circular disk 310 with a rounded edge. Due to the gently curved and protruding edge shape, the gently curved and recessed indentation 410 may be formed in the deformation target region. When using the circular disk 310 with the rounded edge, the size of the indentation 410, the depth of the indentation 410, and/or the degree of curvature of the indentation may be controlled by adjusting one or more factors selected from the thickness and the curvature of the rounded edge of the circular disk 310, and the compressive load applied to the circular disk 310.

FIG. 5C illustrates an example of the circular disk 310 with an eccentric-type edge, and FIG. 5C illustrates an example of a circular disk 310 having an eccentric-type edge, the edge having both a smoothly curved protruding portion and a smoothly curved engraved portion. When using the circular disk 310 with such an eccentric edge, various indentation shapes may be formed by controlling the depth to which the circular disk 310 is pressed, ranging from the gently curved indentation (illustrated in FIG. 5C) similar to the rounded edge to the indentation (not illustrated) with an eccentric edge.

When only the gently curved protruding portion at the eccentric edge is pressed into the base metal, controlling both the degree of protrusion and the location at which the protruding portion is formed allows more precise control not only of the depth of the indentation within the deformation target region but also of the location at which the indentation is formed. Furthermore, the eccentric edge may function substantially identically to the rounded edge with the thickness corresponding to the thickness of the protruding portion. In other words, the circular disk with the eccentric edge may form a narrower indentation, virtually independent of the disk thickness.

When the gently curved, engraved portion of the eccentric edge is pressed into the base metal, the shape of the indentation may be precisely controlled through the size of the deeply recessed portion, the depth of the deeply recessed portion, the size of the shallowly recessed portion, and the degree of the shallowly recessed portion, etc. This precise shape control of the indentation means that the compressive residual stress profile formed in the base metal including the deformation target region may be precisely controlled.

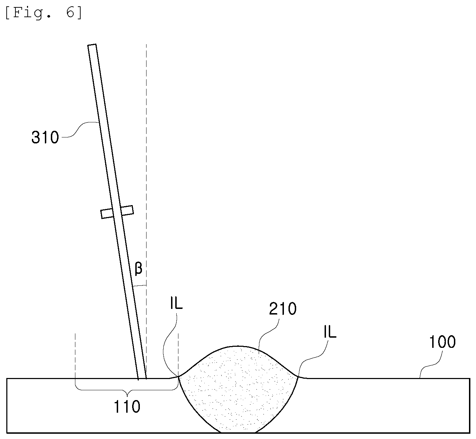

In detailing a specific example based on FIGS. 2, 4, and 5, an example in which the circular disk is perpendicular to the surface of the deformation target region is illustrated, but the present disclosure is not limited thereto. For example, as in the example illustrated in FIG. 6, the circular disk 310 may be perpendicular to the surface of the deformation target region where the indentation is formed, or may be tilted at an angle β of 65° or less (within). In this case, the tilting angle β is an angle based on an angle (0°) when the circular disk is perpendicular to the surface of the deformation target region.

With or independently of the edge shape described above based on FIG. 5, the size, shape, and maximum recessed depth of the indentation formed in the deformation target region may be controlled by the tilting angle itself. This means that, in addition to a compressive load applied to the base metal by the circular disk, precise control of a compressive residual stress profile formed in the base metal, including the deformation target region, is possible by controlling a tilting angle together with an edge shape, or by controlling the tilting angle even with the same edge shape.

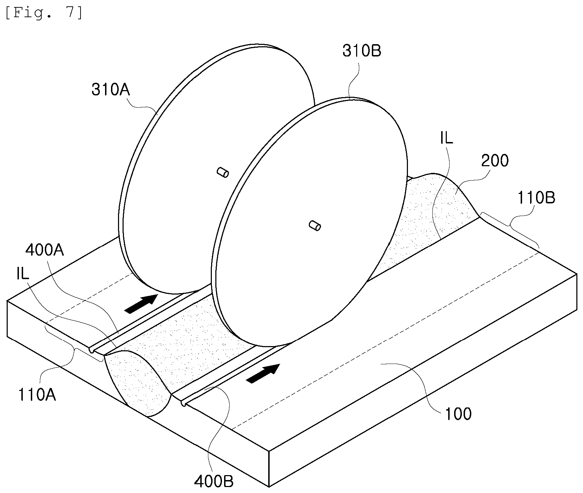

FIG. 7 is a schematic diagram illustrating a process for forming continuous indentations 310A and 310B in each deformation target region 110A and 110B by positioning circular disks 310A and 310B on each deformation target region 110A and 110B on both sides of the welding line 200, according to one specific example of the method for reducing welding residual stress.

As the interface IL with the base metal 100 is formed on both sides of the welding line 200, the deformation target regions 110A and 110B may be positioned on each side of the welding line 200 in the steel structure.

As illustrated in an example in FIG. 7, the circular disks 310A and 310B are positioned for each deformation target region 110A and 110B, allowing the compressive residual stress to be formed substantially simultaneously in both deformation target regions 110A and 110B around the welding line 200. As illustrated in FIG. 7, by forming the compressive residual stress substantially simultaneously in the deformation target regions in which the relief of the welding tensile residual stress is required, the time required for residual stress reduction may be significantly reduced, and productivity may be improved.

When the circular disks are positioned for each deformation target region, the two circular disks 310A and 310B may be identical in one or more factors selected from the applied compressive load, the shape of the disk edge, the thickness of the disk, the tilting angle of the disk, the diameter of the disk, and the rotational speed of the disk. Alternatively, one or more factors may be different from each other.

As described above, the compressive load, edge shape, thickness, and tilting angle of the circular disk are major factors affecting the compressive residual stress profile. The compressive load and the diameter and rotational speed of the disk are also major factors affecting the degree of frictional heat generation. This variation means that, depending on the deformation target region and the intended purpose and design, indentations (indentation lines) may be formed such that they are heated to different temperatures and have different compressive residual stress profiles.

The variation in one or more of the factors selected from the diameter and rotational speed of the disk, either together with or separately from the compressive load, means that the frictional heat generated by each circular disk may vary.

When members made of different base metals (first and second base metals) are welded to form the steel structure, the welding residual stress profile formed on the first base metal side and the welding residual stress profile formed on the second base metal side centered on the welding line are inevitably different.

According to one specific example, a method for reducing welding residual stress may be performed by independently adjusting the diameter and/or rotational speed of the disk positioned in the deformation target region on opposite sides of the welding line, together with or independently of a compressive load, thereby controlling the degrees of heating of the deformation target regions on the opposite sides of the welding line differently according to properties of base metals, even when the base metals on the opposite sides of the welding line are different and have different material properties.

Furthermore, the method for reducing welding residual stress according to an example embodiment may substantially simultaneously reduce different welding residual stresses according to independent design by independently adjusting the compressive load, edge shape, thickness, and tilting angle of the circular disk for each circular disk positioned in the deformation target region on both sides of the welding line, even when the base metals on both sides of the welding line are different and thus have different welding tensile residual stress profiles.

The example illustrated in FIG. 7 illustrates the steel structure having a single welding line 200. However, the present disclosure is not limited thereto. The steel structure may have multiple welding lines. When the steel structure has Q welding lines (where Q is a natural number greater than or equal to 1), 2Q deformation target regions may be defined. In this case, the circular disk is positioned in each of the 1 to 2Q deformation target regions, allowing the indentations (lines) to be formed in the 1 to 2Q deformation target regions substantially simultaneously.

The specific examples of FIGS. 2 through 7 illustrate a case in which a single circular disk is positioned in a single deformation target region. However, the method for reducing welding residual stress according to an example embodiment encompasses not only a single circular disk positioned in a single deformation target region, but also multiple circular disks positioned in the same deformation target region.

In one specific example, n indentations may be formed in the deformation target region by n (where n is a natural number from 2 to 5) circular disks arranged and spaced apart from each other in the width direction of the welding line. In this case, it should be understood that when the distance therebetween is close, adjacent indentations may be connected, and from a physical continuity perspective, the n indentations may appear as a single indentation.

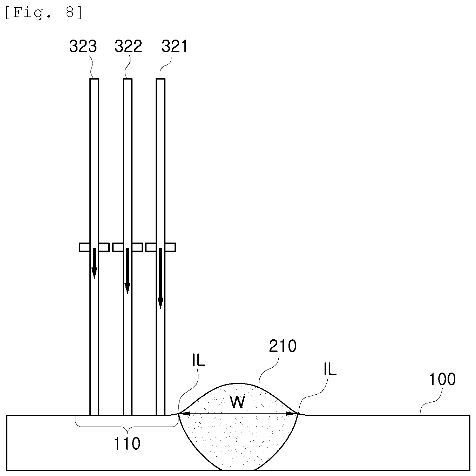

FIG. 8 is a schematic diagram illustrating a process for forming three indentations by positioning three circular disks in a single deformation target region, according to one specific example, in the method for reducing welding residual stress.

As illustrated in an example in FIG. 8, a plurality of circular disks 321, 322, and 323 are arranged spaced apart from each other in the width direction W of the weld bead 210 and may be positioned in the deformation target region 110. In the example of FIG. 8, as an example in which the compressive loads applied to each disk are different, the size of the compressive load applied to the circular disk is illustrated by the length of the arrow.

By positioning the plurality of circular disks 321, 322, and 323 in the deformation target region 110 and independently adjusting, for each circular disk, one or more factors selected from the compressive load (as illustrated in FIG. 8), the thickness of the circular disk, the edge shape of the circular disk, the tilting angle of the circular disk, the diameter of the circular disk, and the rotational speed of the circular disk, a wider and more precise compressive residual stress profile may be formed under a temperature profile controlled by the frictional heat controlled for each disk.

The tensile residual stress formed by welding may vary depending on the material of the base metal, the welding conditions, the physical shape of the welded joint, etc. Therefore, to relieve the tensile residual stress in the welded joint, the precise control of the stress profile of the compressive residual stress formed is required.

As described above, by controlling one or more factors selected from the thickness, edge shape, tilting angle, diameter, rotational speed, and compressive load (i.e., the depth of indentation) of the circular disk, the size (width), shape, and recessed depth of each of the n indentations formed in the deformation target region may be controlled.

This means that the compressive residual stress profiles generated by each of the n indentations may be controlled independently. In this case, n the compressive residual stress profiles generated by the n indentations accumulate to form a final compressive residual stress profile formed in the base metal including the deformation target region.

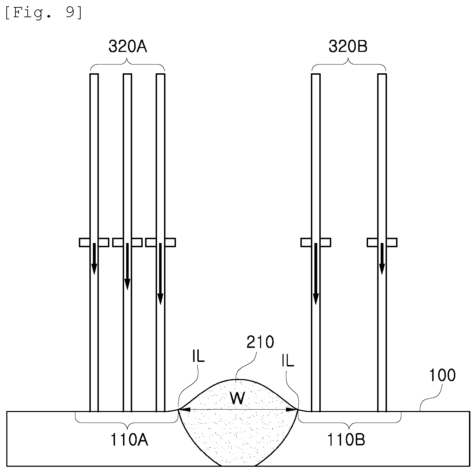

FIG. 9 is a diagram illustrating an example in which a first disk set 320A including j (where j is a natural number from 2 to 5, j=3 in the example of FIG. 9) circular disks arranged spaced apart from each other in the width direction of the welding line (the width direction of the weld bead) and a second disk set 320B including k (where k is a natural number from 2 to 5, k=2 in the example of FIG. 9) circular disks arranged spaced apart from each other in the width direction of the welding line are arranged spaced apart from each other with the welding line 200 interposed therebetween, so that j indentations are formed in one deformation target region 110A among the deformation target regions 110A and 110B on both sides of the welding line 200, and k indentations are formed in the other deformation target region 110B.

The j circular disks constituting the first disk set 320A may have the same or different values for one or more factors selected from the compressive loads applied to each circular disk (one example of FIG. 9), the thickness, edge shape, tilting angle, diameter, and rotational speed of the circular disk. In addition, independently of the first disk set 320, the k circular disks constituting the second disk set 320B may have the same or different values for one or more factors selected from the compressive loads applied to each circular disk (one example of FIG. 9), and the thickness, edge shape, tilting angle, diameter, and rotational speed of the circular disk.

As illustrated in the example of FIG. 9, by positioning the first disk set 320A and the second disk set 320B in the deformation target regions 110A and 110B on both sides of the welding line and forming the indentation, a wider and more precisely controlled compressive residual stress profile can be generated under the controlled temperature profile for each deformation target region, while significantly reducing the time required for residual stress reduction and improving productivity.

Furthermore, as illustrated in the examples of FIGS. 8 and 9, when a disk set including the plurality of circular disks arranged spaced apart from each other in the width direction of the welding line is positioned in the deformation target region, even when the indentation is formed shallowly, it is advantageous because the targeted compressive residual stress profile can still be achieved.

Considering the intended use of the steel structure having the welding line, the depth of the indentation may need to be controlled to a level that does not significantly adversely affect the intended use. For example, when the steel structure is a fluid storage vessel that holds pressurized fluid, it is advantageous for the maximum depth of the indentation to be within 100 µm. However, when the depth of the indentation is controlled, it may be difficult to form a single indentation using a single circular disk to achieve the targeted level of the compressive residual stress. However, when the disk set including the plurality of circular disks arranged spaced apart from each other in the width direction is positioned, the plurality of shallow indentations may be formed. The compressive residual stress profiles for each indentation may accumulate to form the compressive residual stress (the final compressive residual stress applied to the base metal). Accordingly, this facilitates the formation of the targeted level of the compressive residual stress even with the shallow indentations.

In one specific example, l (where l is a natural number from 2 to 4) circular disks spaced apart from each other in the longitudinal direction of the welding line may be positioned in the deformation target region.

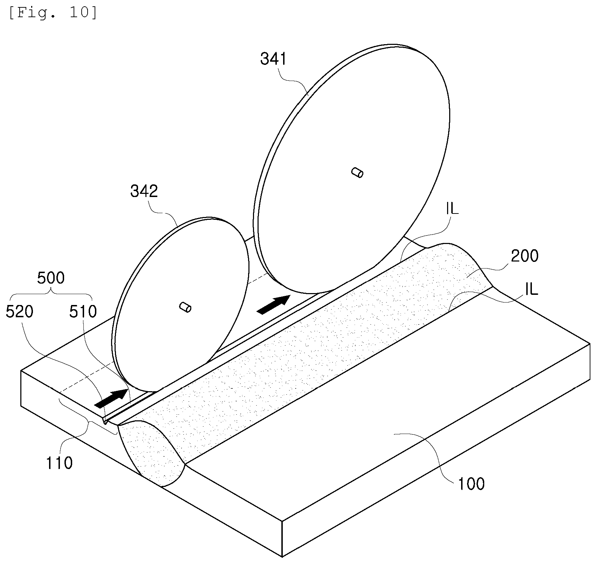

FIG. 10 is a schematic diagram illustrating a process in which two circular disks 341 and 342 are positioned in the deformation target region 110 but spaced apart from each other in the longitudinal direction of the welding line 200 in the method for reducing welding residual stress according to one specific example.

In this case, based on the movement direction (as indicated by arrows in FIG. 10) of the circular disks 341 and 342, the movement trajectories of the preceding circular disk 341 and the succeeding circular disk may overlap each other.

Due to the overlapping movement trajectories of circular disks 341 and 342, in the deformation target region 110, a first indentation line 510 may first be formed by the preceding circular disk 341, and a second indentation line 520 may then be formed so as to at least partially overlap the first indentation line 510, thereby forming an indentation line 500 with the final designed cross-sectional shape.

The example of FIG. 10 illustrates an example in which a width of the first indentation line 510 is larger than that of the second indentation line 520, and thus the second indentation line 520 is formed again within the pre-formed first indentation line 510, but the present disclosure is not limited thereto.

By overlapping the first and second indentation lines 510 and 520 to form the final indentation line 500, the compressive residual stress profile formed in the base metal may be controlled more precisely than when forming the indentation line 500 with a single circular disk.

For example, the width of the first indentation line may be narrower than that of the second indentation line. In extreme cases, the second indentation line may be so wide and deep that, when observing only the physical shape of the final indentation line, it could appear as if only the second indentation line exists. However, even when the first indentation line is pre-formed and the second indentation line is subsequently formed to cover the first indentation line, so that any trace of the first indentation line disappears, the compressive residual stress profile ultimately formed in the base metal due to the pre-formed first indentation line may differ from that resulting solely from the second indentation line.

Furthermore, when the first indentation line 510 is pre-formed, the deformation target region is heated by frictional heat between the circular disk 341 forming the first indentation line 510 and the base metal 100. Then, the circular disk 342 forming the second indentation line 520 may generate the frictional heat again. In other words, while the wide base metal region is heated by the preceding circular disk 341, the region where a deep indentation is to be formed may be selectively and additionally heated by a succeeding circular disk 642. This thermal control may allow the circular disk to move more quickly, and at the same time prevent excessive heat from being applied to the base metal region other than the intended area.

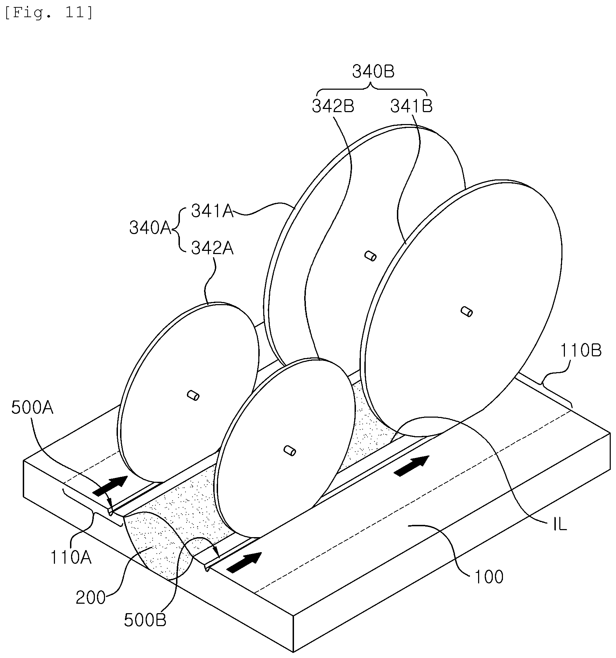

FIG. 11 is a process diagram illustrating an example in which a third disk set 340A including l (where l is a natural number from 2 to 4, in the example of FIG. 11, l=2) circular disks 341A and 342A spaced apart from each other in the longitudinal direction of the welding line 200 and a fourth disk set 340B including m (where m is a natural number from 2 to 4, in the example of FIG. 11, m=2) circular disks 341B and 342B spaced apart from each other in the longitudinal direction of the welding line 200 are spaced apart from each other in the longitudinal direction of the welding line 200, and the indentation line 500A or 500B in which at least two or more indentations overlap each other is formed in each of the deformation target regions 110A and 110B on both sides of the welding line 200.

As illustrated in the example illustrated in FIG. 11, the disk set including the plurality of circular disks spaced apart from each other in the longitudinal direction is positioned in each deformation target region with the welding line interposed therebetween to form the indentation line, thereby forming a more precisely controlled compressive residual stress profile and quickly relieving the welding residual stress in the state in which the thermal profile is controlled.

As illustrated in the examples of FIGS. 10 and 11, even when the plurality of circular disks are arranged spaced apart from each other in the longitudinal direction of the welding line, one or more factors selected from the compressive loads applied to each circular disk, and the thickness, edge shape, tilting angle, diameter (examples illustrated in FIGS. 10 and 11), and rotational speed of the circular disk, may be different or the same. Furthermore, one or more selected factors may be controlled for each circular disk.

The examples of FIGS. 8 and 9 illustrate a case where the plurality of circular disks are spaced apart from each other in the width direction of the welding line in one deformation target region, and the examples of FIGS. 10 and 11 illustrate a case where the plurality of circular disks are spaced apart from each other in the longitudinal direction of the welding line in one deformation target region. However, the spacing direction of the circular disks is not limited to the width direction or the longitudinal direction.

When the plurality of circular disks (disk sets) are arranged spaced apart from each other in one deformation target region, the spacing may include spacing in the width direction of the welding line; spacing in the longitudinal direction of the welding line; and/or spacing in the width direction of the welding line and spacing in the longitudinal direction of the welding line.

The "spacing in the width direction of the welding line and spacing in the longitudinal direction of the welding line" may mean that the disk set includes both circular disks spaced apart from each other in the width direction of the welding line relative to a circular disk A and circular disks spaced apart in the longitudinal direction of the welding line relative to one circular disk A. Together with or independently from this, the "spacing in the width direction of the welding line and the spacing in the longitudinal direction of the welding line" may mean that the disk set includes at least one circular disk, spaced apart from one circular disk A by a predetermined distance in the width direction of the welding line and also by a predetermined distance in the longitudinal direction of the welding line.

When the disk set is positioned in the deformation target region, the moving speeds of each circular disk forming the disk set may be at least substantially the same. Furthermore, the moving speeds of the first disk set and the second disk set may be substantially the same; however, depending on the targeted purpose, the moving speeds of the first disk set and the second disk set may be controlled differently.

At the point where the indentation is formed by the circular disk or the circular disk set, the temperature in the deformation target region may be such that the targeted compressive residual stress profile may be achieved and a significantly reduced compressive load may be applied. However, it is preferable that the temperature (maximum temperature) in the deformation target region is higher than the temperature of undesirable phase transformations, etc., and does not adversely affect the base metal. For example, when the steel is a high-strength steel with a high yield strength (e.g., YS690 grade), it is preferable that the temperature (maximum temperature) in the deformation target region is controlled below a eutectoid transformation point (A1 transformation point). As a practical and non-limiting example, in the case of the high-strength steel with high yield strength (e.g., YS690 grade), the maximum temperature in the deformation target region (the area where the circular disk contacts the deformation target region) may be 500 to 600°C.

The moving speed of the circular disk or the circular disk set may be any speed sufficient to form a desired indentation line in consideration of material properties of the steel. As a practical and non-limiting example, when the steel is the high-strength steel with high yield strength (e.g., YS690 grade), the moving speed may be, but is not limited to, 10 cm/min to 60 cm/min.

The thickness of the circular disk is sufficient to ensure stable rotation, prevent buckling, and achieve the targeted edge shape by considering the material used. As a practical and non-limiting example, when the circular disk is made of carbon steel, the thickness may range from 1 mm to 10 mm, but is not limited thereto. Furthermore, as described above, depending on the edge shape, the thickness of the circular disk and the size of the indentation may be substantially unrelated.

The rotational speed of the circular disk may be any rotational speed sufficient to obtain the targeted thermal profile by considering the specific properties of the base metal, the weld structure (joint configuration), the size of the region in the deformation target region where compressive residual stress is to be formed, the arrangement of spheres within the disk set when the disk set is configured, etc. As a practical and non-limiting example, when a single circular disk with a diameter of 100 mm or more is positioned in the deformation target region and the steel is the high-strength steel with high yield strength (e.g., YS690 grade), the rotational speed of the circular disk may range from 10 rpm to 600 rpm. It should be noted that the rotational speed may vary beyond the specified range depending on the use of the disk set and the arrangement of the spheres within the disk set.

The compressive load applied to the circular disk may be the compressive load that may form the targeted compressive residual stress profile by considering the sphere properties of the base metal, the edge shape of the circular disk, the tilting angle of the circular disk, the targeted temperature profile of the deformation target region, the welding residual stress profile formed in the deformation target region, the weld structure (joint configuration), the arrangement of the spheres within the disk set when the disk set is configured, etc. As a practical and non-limiting example, when a single circular disk is positioned in the deformation target region, is a butt joint, and is welded using single-pass submerged arc welding (SAW), the circular disk has rounded edges and has a tilting angle of 0° (perpendicular to the deformation target region surface), and the steel is the high-strength steel with high yield strength (e.g., YS690 grade), the compressive load applied to the circular disk may be a load that applies a pressure of 250 to 350 MPa to the base metal by considering the contact area between the disk and the base metal.

According to one specific example, the above-described method for reducing welding residual stress may be performed subsequent to the welding process during the welding between the base metals.

In this case, the frictional heat generated by the circular disk is added to the deformation target region having the welding residual heat, and the temperature profile of the deformation target region may be controlled. The welding residual heat significantly reduces the amount of frictional heat generated by the circular disk, enabling faster circular disk movement and enabling more precise, selective heating of targeted areas (additional heating via frictional heat).

According to one specific example, the method for reducing welding residual stress may further include a step of annealing the steel structure after forming a continuous linear-shaped indentation, and, after the annealing, performing a surface treatment step to remove surface irregularities caused by the indentation.

The annealing is intended to relieve stress in areas where the plastic deformation has occurred due to the circular disk and may be performed by applying heat of approximately 200°C or less, or substantially 100 to 200°C, to the area where the indentation line is positioned. In this case, the application of heat may be performed through irradiation with heat, including near-infrared or infrared rays, application of hot air, contact with a heating element, loading into a constant-temperature space, etc., but the present disclosure is not limited to the specific annealing method.

The surface treatment may include, but is not limited to, physical surface treatment such as grinding.

The above-described method for reducing welding residual stress is particularly useful when the specific application of the steel structure is such that tensile residual stress has a detrimental effect. Examples of steel structure applications where the tensile residual stress has a detrimental effect include fluid storage containers such as high-pressure gas or high-pressure liquid containers, ship structures, marine structures, offshore wind power monopiles, automobile bodies, etc. However, the present disclosure is not limited to the application of the steel structure.

Hereinafter, an apparatus for reducing welding residual stress in a steel structure having a welding line is described in detail.

In the reduction apparatus, the welding line, steel structure, the base metal, the interface between the weld bead and the base metal, the deformation target region, the circular disk, the disk set, the indentation, the indentation line, the formation of the indentation line, the compressive load (axial load), and the compressive residual stress profile formed in the base metal are similar to or identical to those described in the above-described method for reducing welding residual stress. Accordingly, the apparatus for reducing welding residual stress includes all of the contents described above in the method for reducing welding residual stress.

According to one disclosure, the apparatus for reducing welding residual stress in a steel structure having a welding line includes a deformation unit including a circular disk that is rotatable while in contact with a base metal in a deformation target region, which is a base metal region adjacent to an interface between a weld bead and the base metal of the welding line, a load applying unit applying an axial load to the circular disk of the deformation unit in a direction of the base metal, and a transfer unit I transferring the transformation unit in a longitudinal direction of the welding line along the welding line so that the circular disk is positioned within the deformation target region.

According to another disclosure, the apparatus for reducing welding residual stress in a steel structure having a welding line includes a deformation unit including a circular disk that is rotatably provided while in contact with a base metal in a deformation target region, which is a base metal region adjacent to an interface between a weld bead and the base metal of the welding line, a load applying unit applying an axial load (compressive load) to the circular disk of the deformation unit in a direction of the base metal, and a transfer unit II transferring the steel structure in a longitudinal direction of the welding line so that the circular disk is positioned within the deformation target region.

As described above, the apparatus for reducing welding residual stress includes two modes: a case where the element transferred by the transfer unit is the steel structure and a case where the deformation unit is a deformation unit.

The deformation unit may include a conventional rotation means capable of rotating the circular disk. For example, the deformation unit may include a magnetic-based rotation means that is fixed by a magnetic coupling and may be rotated by a rotating magnetic field, or a mechanical rotation means including a rotation shaft that rotates by a mechanical force such as an electric motor drive or air pressure.

For precise rotational speed control and easy, independent rotational speed control for each circular disk, the rotational means may be a magnetically driven rotational means. The magnetically driven rotational means may include a driving magnet and a rotating magnet intersecting the driving magnet at a 90° angle with a predetermined gap. The rotating magnet may rotate through the attractive and repulsive forces generated between the rotating magnet and the driving magnet. The circular disk may be coupled to the rotating magnet via a rotating shaft so that the circular disk may rotate integrally with the rotating magnet.

The load application unit may include a conventional pressurizing means configured to apply pressure to the circular disk, specifically, the rotational shaft of the circular disk, so that the circular disk applies the compressive load to the base metal. Examples of the pressurizing means include, but are not limited to, a pneumatic drive device, a hydraulic drive device, a mechanical displacement drive device, etc.

The transfer unit I may include the conventional transfer means I that allows the deformation unit, including the circular disk, to move along the welding line of the steel structure. The specific transfer means I may be determined and provided by considering the physical shape of the welding line within the steel structure. For example, when the welding line is in the form of a straight line, the transfer means I may include an X-axis unit that operates back and forth. As another example, when the welding line is in the form of a curve within a plane, the transfer means I may include a Y-axis unit that operates left and right, the X-axis unit that operates back and forth, and a rotation unit that rotates horizontally around a rotation axis. As still another example, when the welding line is in the form of a three-dimensional curve, the transfer means I may include the X-axis unit that operates back and forth, the Y-axis unit that operates left and right, a Z-axis unit that operates up and down, and the rotation unit that rotates horizontally around the rotation axis. In this case, regardless of the physical shape of the welding line, the transfer means I may include the Z-axis unit, and the lifting and lowering of the deformation unit may be controlled by this Z-axis unit. That is, when the residual stress reduction apparatus operates, the deformation unit may be moved to contact the deformation target region via the Z-axis unit, and when the residual stress reduction apparatus is terminated, the deformation unit may be moved to avoid contact with the deformation target region via the Z-axis unit.

The transfer unit II may include the conventional transfer means II that allows the deformation target region of the steel structure to move along the welding line below the deformation unit, which includes the circular disk fixed at a predetermined position. The specific transfer means II may be determined and provided by considering the physical shape of the welding line within the steel structure. For example, when the welding line is in the shape of a straight line or a curve, the transfer unit may include a belt conveyor or a roller conveyor driven by a power source. As another example, when the welding line is in the form of a three-dimensional curve, the transfer means II may include the X-axis unit that operates back and forth, the Y-axis unit that operates left and right, a Z-axis unit that operates up and down, and the rotation unit that rotates horizontally around the rotation axis. When the transfer unit transfers the steel structure, the welding residual stress reduction apparatus may further include a lift member that moves the deformation unit up and down. The lift member may control the lifting and lowering of the deformation unit, and may contact/separate the deformation unit from the steel structure during operation/termination of the apparatus.

Similarly or identically to the above-described method based on FIG. 7, the deformation unit may include two circular disks arranged spaced apart from each other, with the welding line interposed therebetween, and contacting the deformation target regions on both sides of the welding line, respectively.

Similar to or identical to the above-described based on FIGS. 8 and 9, the deformation unit includes a first disk set and a second disk set that are arranged spaced apart from each other and contact the deformation target regions on both sides of the welding line with the welding line interposed therebetween, the first disk set may include j (where j is a natural number from 2 to 5) circular disks arranged spaced apart from each other in the width direction of the welding line, and the second disk set may include k (where k is a natural number from 2 to 5) circular disks arranged spaced apart from each other in the width direction of the welding line.

Similar to or identical to the above-described deformation unit based on FIGS. 10 and 11, the deformation unit includes a third disk set and a fourth disk set, which are arranged spaced apart from each other and contact the deformation target regions on both sides of the welding line, respectively, with the welding line interposed therebetween, the third disk set may include l (where l is a natural number from 2 to 4) circular disks spaced apart from each other in the longitudinal direction of the welding line, and the fourth disk set may include m (where m is a natural number from 2 to 4) circular disks spaced apart from each other in the longitudinal direction of the welding line.

If necessary, the apparatus may further include a tilting unit that tilts the circular disks at a predetermined angle.

In one specific example embodiment, the apparatus may further include a control unit. The control unit may control the rotational speed of each circular disk by operating the mechanical or magnetic rotational means, control the transfer speed of the deformation unit or the steel structure via the transfer means I and II, and/or control the load applied to each circular disk via the load applying unit.

While example embodiments have been shown and described above, it will be apparent to those skilled in the art that modifications and variations could be made without departing from the scope of the present disclosure as defined by the appended claims.

### Description of Reference Characters

100: Base metal
110, 110A, 110B: Deformation target region
210: Weld bead
200: Welding line
310, 310A, 310B, 321. 322, 323, 341, 342: Circular disk
320A, 320B, 340A, 340B: Disk set
410: Indentation
400, 400A, 400B, 500A, 500B: Indentation line

## Claims

1. A method for reducing welding residual stress in a steel structure having a welding line, comprising:
plastically deforming a deformation target region, which is a base metal region adjacent to an interface between a weld bead of a welding line and a base metal, by bringing a circular disc into contact with the deformation target region and applying a compressive load to the deformation target region by the circular disk which is rotating; and
transferring, in the deformation target region, the steel structure or the circular disk such that an indentation caused by the plastic deformation extends in continuous linear form along the welding line.

2. The method of claim 1, wherein, during the plastic deformation, the deformation target region is heated by at least frictional heat generated by the rotation of the circular disk.

3. The method of claim 2, wherein a depth of the indentation is controlled by a heating temperature of the deformation target region and the compressive load applied by the circular disk.

4. The method of claim 2, wherein a diameter of the circular disk is 100 mm or greater.

5. The method of claim 2, wherein an edge of the circular disk is a tapered type, a rounded type, or an eccentric type.

6. The method of claim 1, wherein the circular disk is perpendicular to a surface of the deformation target region where the indentation is formed, or tilted at an angle of 65° or less.

7. The method of claim 1, wherein n indentations are formed in the deformation target region by n (where n is a natural number from 2 to 5) circular disks spaced apart from each other in a width direction of the welding line.

8. The method of claim 1, wherein two circular disks are arranged spaced apart from each other with the welding line interposed therebetween, so that the indentations are formed in each of the deformation target regions on both sides of the welding line.

9. The method of claim 1, wherein a first disk set including j (where j is a natural number from 2 to 5) circular disks arranged spaced apart from each other in the width direction of the welding line, and a second disk set including k (where k is a natural number from 2 to 5) circular disks arranged spaced apart from each other in a width direction of the welding line are arranged spaced apart from each other with the welding line interposed therebetween, so that j indentations are formed in one deformation target region among deformation target regions on both sides of the welding line and k indentations are formed in the other deformation target region.

10. The method of claim 1, further comprising:
l (where l is a natural number from 2 to 4) circular disks arranged spaced apart from each other in a longitudinal direction of the welding line.

11. The method of claim 10, wherein a third disk set including the l circular disks and a fourth disk set including m (where m is a natural number from 2 to 4) circular disks arranged spaced apart from each other in the longitudinal direction of the welding line are arranged spaced apart from each other with the welding line interposed therebetween, so that at least two indentations are superimposed in each of the deformation target regions on both sides of the welding line.

12. The method of claim 9 or 11, wherein the circular disks forming the disk set are identical or different in at least one factor selected from a diameter of the disk, a thickness of the disk, a shape of a disk edge, a tilting angle of the disk, a compressive load applied to the disk, and a rotational speed of the disk.

13. The method of claim 1, wherein the deformation target region is a region within 0.1 cm to 20 cm from the interface toward the base metal.

14. The method of claim 2, wherein the frictional heat is applied to the deformation target region having residual weld heat.

15. The method of claim 1, further comprising:
after the formation of the continuous linear indentation is completed,
annealing the steel structure on which the indentation is formed; and
after the annealing, a surface treatment step of removing surface irregularities caused by the indentation.

16. The method of claim 1, wherein the steel structure is a fluid storage vessel, a ship structure, a marine structure, an offshore wind power monopile, or an automobile body.

17. An apparatus for reducing welding residual stress in a steel structure having a welding line, comprising:
a deformation unit including a circular disk that is rotatable while in contact with a base metal in a deformation target region, which is a base metal region adjacent to an interface between a weld bead and the base metal of the welding line;
a load applying unit applying an axial load to the circular disk of the deformation unit in a direction of the base metal; and
a transfer unit transferring the steel structure in a longitudinal direction of the welding line so that the circular disk is positioned within the deformation target region.

18. An apparatus for reducing welding residual stress in a steel structure having a welding line, comprising:
a deformation unit including a circular disk that is rotatable while in contact with a base metal in a deformation target region, which is a base metal region adjacent to an interface between a weld bead and the base metal of the welding line;
a load applying unit applying an axial load to the circular disk of the deformation unit in a direction of the base metal; and
a transfer unit transferring the deformation unit in a longitudinal direction of the welding line along the welding line so that the circular disk is positioned within the deformation target region.

19. The apparatus of claim 17 or 18, wherein the deformation unit includes two circular disks arranged spaced apart from each other and each contacting deformation target regions on both sides of the welding line, with the welding line interposed therebetween.

20. The apparatus of claim 17 or 18, wherein the deformation unit includes a first disk set and a second disk set arranged spaced apart from each other and each contacting deformation target regions on both sides of the welding line, with the welding line interposed therebetween,
the first disk set includes j (where j is a natural number from 2 to 5) circular disks arranged spaced apart from each other in a width direction of the welding line, and
the second disk set includes k (where k is a natural number from 2 to 5) circular disks arranged spaced apart from each other in the width direction of the welding line.

21. The apparatus of claim 17 or 18, wherein the deformation unit includes a third disk set and a fourth disk set arranged spaced apart from each other and each contacting deformation target regions on both sides of the welding line, with the welding line interposed therebetween,
the third disk set includes l (where l is a natural number from 2 to 4) circular disks arranged spaced apart from each other in the longitudinal direction of the welding line,
the fourth disk set includes m (where m is a natural number from 2 to 4) circular disks arranged spaced apart from each other in the longitudinal direction of the welding line.

22. The apparatus of claim 17 or 18, further comprising:
a control unit controlling one or more factors selected from a rotational speed of the circular disk, a transfer speed of the transfer unit, and a load applied to the circular disk by the load applying unit.
